# EUROPÄISCHE PATENTSCHRIFT

(11) **EP 3 144 183 B1**
(45) Veröffentlichungstag und Bekanntmachung des Hinweises auf die Patenterteilung: **05.05.2021**
(21) Anmeldenummer: 16188657.7
(22) Anmeldetag: 13.09.2016
(51) Int. Cl.: B60Q 1/26, F21S 43/40, F21S 43/31

(54) **BELEUCHTUNGSEINRICHTUNG, FAHRZEUGKOMPONENTE UND FAHRZEUG**
LIGHTING DEVICE, VEHICLE COMPONENT AND VEHICLE
DISPOSITIF D'ECLAIRAGE, COMPOSANT DE VEHICULE ET VEHICULE

(30) Priorität: 15.09.2015 DE 202015104894 U
(43) Veröffentlichungstag der Anmeldung: 22.03.2017
(73) Patentinhaber: SMR Patents S.à.r.l., 2453 Luxembourg (LU)
(72) Erfinder: Schmidt, Oliver, 70329 Stuttgart (DE); Fritz, Daniel, 70374 Stuttgart (DE)
(74) Vertreter: Weber-Bruls, Dorothée

(56) Entgegenhaltungen:
- EP-A1- 2 009 483
- DE-A1-102008 003 451
- DE-A1-102012 024 494
- DE-A1-102014 203 313
- US-A1- 2003 038 928
- US-A1- 2007 273 847
- US-A1- 2010 321 945
- US-A1- 2014 328 071

## Beschreibung

Die Erfindung betrifft eine Fahrzeugkomponenten-Beleuchtungseinrichtung nach dem Oberbegriff von Anspruch 1 sowie eine Fahrzeugkomponente und ein Kraftfahrzeug damit.

Beleuchtungseinrichtungen für Kraftfahrzeuge sind aus dem Stand der Technik bekannt. Beispielsweise wird in der DE 20 2008 016 695 U1 eine Beleuchtungseinrichtung mit einer sogenannten Logolampe beschrieben, bei der durch das Zusammenwirken von einem Leuchtmittel, einer Kondensoreinheit, einem Maskenmittel und einer Objektiveinheit ein Bild oder ein Schriftzug auf eine Projektionsfläche projiziert wird. Die Beleuchtungseinrichtung ist in einer als Außenspiegel realisierten Rückblickvorrichtung angeordnet, um ein Bild oder ein Schriftzug auf eine Fahrbahn oder auf einen Bürgersteig zu projizieren. Die einzelnen Komponenten der Beleuchtungseinrichtung sind in einem tubusförmigen Gehäuse hintereinander angeordnet. Aufgrund des im Wesentlichen vertikalen Verlaufs des Strahlengangs ist die bekannte Beleuchtungseinrichtung in dem Außenspiegel im Wesentlichen senkrecht zu der Projektionsfläche angeordnet. Die Beleuchtungseinrichtung kann direkt in einem Außenspiegel integriert sein, oder in einer entsprechenden Aufnahme an dem Außenspiegel angebracht werden. Allerdings ist durch die starre Anordnung der einzelnen Komponenten der Beleuchtungseinrichtung in dem tubusförmigen Gehäuse die Integration der Beleuchtungseirichtung in oder an dem Außenspiegel wegen des begrenzten Platzangebotes schwierig.

In der DE 101 34 594 A1 wird eine Beleuchtungseinrichtung beschrieben, die angepasst ist ein mit der Fahrsituation korreliertes Objekt in einen Umgebungsbereich eines Fahrzeugs zu projizieren.

Die DE 10 2004 050 600 A1 beschreibt eine Beleuchtungseinrichtung für ein Fahrzeug zur Erzeugung eines Ausleuchtungsfelds im Bereich einer Fahrzeugtür.

In der US 2009/0161379 A1 wird das Projizieren eines Musters auf einen Untergrund mittels einer Beleuchtungseinrichtung in einem Außenspiegel beschrieben.

Aus der DE 10 2008 003 451 A1 ist eine Abbildungseinrichtung zur Projektion einer Abbildung auf eine Projektionsfläche bekannt. Die Abbildungseinrichtung umfasst insbesondere ein strahlungsemittierendes Bauelement, das im Betrieb elektromagnetische Strahlung entlang einer Abstrahlrichtung abstrahlt. Die Abbildungseinrichtung umfasst ferner ein abbildungserzeugendes Element im Strahlengang des strahlungsemittierenden Bauelements, ein strahlungslenkendes Element im Strahlengang des strahlungsemittierenden Bauelements zur Lenkung der elektromagnetischen Strahlung auf die Projektionsfläche und eine Strahlungsaustrittsfläche, wobei die Projektionsfläche seitlich zur Strahlungsaustrittsfläche versetzt ist.

Weitere Beleuchtungseinrichtung für Fahrzeuge und/oder Komponenten für Beleuchtungseinrichtungen werden in US 2014/0362596 A1, US 2014/328071 A1, WO 2015/122482 A1 und DE 10 2006 057 671 A1 beschrieben.

Die Aufgabe der vorliegenden Erfindung ist es daher, die gattungsgemäße Beleuchtungseinrichtung derart weiterzuentwickeln, dass sie flexibel in oder an einer Fahrzeugkomponente angeordnet werden kann.

Diese Aufgabe wird erfindungsgemäß durch die Fahrzeugkomponenten-Beleuchtungseinrichtung gemäß dem Kennzeichen von Anspruch 1 gelöst.

Bevorzugte Ausführungsbeispiele der Beleuchtungseinrichtung sind in den Ansprüchen 2 bis 6 beschrieben.

Die erfindungsgemäße Fahrzeugkomponenten-Beleuchtungseinrichtung für eine Rückblickvorrichtung eines Kraftfahrzeugs, weist mindestens ein Leuchtmittel auf, wobei das Leuchtmittel angepasst ist, Licht abzustrahlen. Die Beleuchtungseinrichtung weist weiterhin eine Kondensoreinheit auf, umfassend mindestens eine Kondensorlinse, wobei die Kondensoreinheit angepasst ist, das von dem mindestens einen Leuchtmittel abgestrahlte Licht in einen Strahlengang zu bündeln. Der Begriff "Strahlengang" bezieht sich dabei auf den geometrischen Verlauf von Lichtstrahlen und kann auch als Strahlrichtung bezeichnet werden. Der Begriff "Bündeln" bezieht sich auf ein Einkoppeln von Licht in einen Strahlengang, wobei ein möglichst großer Teil des abgestrahlten Lichts des Leuchtmittels in den abbildenden Strahlengang eingebracht werden sollte. Weiterhin weist die Beleuchtungseinrichtung mindestens ein Maskenmittel auf, das in dem Strahlengang angeordnet ist und durch das ein Bild, Symbol, Logo und/oder ein Schriftzug auf einer Projektionsfläche darstellbar ist. Weiterhin weist die Beleuchtungseinrichtung eine Objektiveinheit mit mindestens einer Objektivlinse auf, die in dem Strahlengang angeordnet ist. Erfindungsgemäß weist die Beleuchtungseinrichtung auch mindestens eine Reflektoreinheit auf, die zwischen der Kondensoreinheit und der Projektionsfläche angeordnet ist, wobei die Reflektoreinheit angepasst ist, den Strahlengang, insbesondere im Wesentlichen quer oder schräg zur Projektionsfläche, umzulenken, wobei die Reflektoreinheit ein Reflektorelement umfasst, das mindestens einen Oberflächenabschnitt umfasst, durch den das Licht bezüglich des Strahlengangs umlenkbar ist, und wobei der Oberflächenabschnitt des Reflektorelements als Freiformfläche ausgebildet ist, um das Licht zu bündeln. Der Ausdruck "quer oder schräg zur Projektionsfläche umlenken" bezieht sich in diesem Zusammenhang auf eine Umlenkung, bzw. Ablenkung, des Strahlengangs unter einem Winkel zum Lot der Projektionsfläche. Auch kann unter "Umlenkung des Strahlengangs" eine Umlenkung einer optischen Achse verstanden werden. In diesem Zusammenhang beschreibt der Begriff "optische Achse" die gemittelte Ausbreitungsrichtung aller sich im abbildenden Strahlengang befindlichen Strahlen zwischen aufeinanderfolgenden Einheiten.

Durch das Verwenden der Reflektoreinheit kann die Beleuchtungseinrichtung auf platzsparende Art und Weise in oder an der Fahrzeugkomponente angeordnet werden. Die erfindungsgemäße Beleuchtungseinrichtung muss nicht ausschließlich vertikal zu einer Projektionsfläche angeordnet werden, sondern kann beispielsweise auch schräg zur Projektionsfläche oder parallel zur Projektionsfläche angeordnet werden. Hierdurch wird die Integration der Beleuchtungseinrichtung in der Fahrzeugkomponente insofern erleichtert, als dass für die Beleuchtungseinrichtung nicht zwingend ein bestimmter Platz vorgesehen sein muss, sondern die Beleuchtungseinrichtung an einer Stelle und mit einer Ausrichtung in den Fahrzeugkomponenten vorgesehen werden kann, die hierfür gerade ausreichend Platz für den Einbau bietet.

In einem Beispiel ist die Reflektoreinheit angepasst, den Strahlengang in einem Bereich von 35° bis 145 °, bevorzugt von 45° bis 135°, bevorzugter von 60° bis 120°, insbesondere um 90°, umzulenken.

Nach der Erfindung ist die mindestens eine Reflektoreinheit entlang des Strahlengangs des Lichts, ausgehend vom Leuchtmittel bis zur Projektionsfläche, vor der Objektiveinheit angeordnet. Grundsätzlich ist es denkbar, dass die Beleuchtungseinrichtung mehrere Reflektoreinheiten umfasst. Dieses erweist sich insbesondere dann als vorteilhaft, wenn der zur Verfügung stehende Einbauraum innerhalb der Fahrzeugkomponente nicht geradlinig, sondern verwinkelt ist.

Darüber hinaus ist es denkbar, dass das Leuchtmittel durch ein weiteres Reflektormittel derart umgeben ist, dass Licht, das nicht in den Strahlengang eingekoppelt wird, durch das Reflektormittel gesammelt wird und in den Strahlengang eingekoppelt wird. Hierdurch lässt sich die Intensität des Lichts in dem Strahlengang, sowie die Nutzung des durch das Leuchtmittel ausgestrahlten Lichts verbessern.

Erfindungsgemäß ist das Maskenmittel entlang des Strahlengangs des Lichts, ausgehend vom Leuchtmittel bis zur Projektionsfläche, zwischen der Kondensoreinheit und der Objektiveinheit angeordnet.

In einem Beispiel umfasst die Reflektoreinheit das Maskenmittel. Die Beleuchtungseinrichtung lässt sich kompakt und bauteilreduziert realisieren, wenn die Reflektoreinheit das Maskenmittel umfasst. In diesem Fall können Maskenmittel und Reflektoreinheit beispielsweise in einem gemeinsamen Bauteil umfasst sein, oder derart zusammengefügt werden, dass sie unlösbar oder lösbar miteinander verbunden sind und als vormontierte Baugruppe der Reflektoreinheit hinzugefügt werden können.

In einem weiteren Beispiel ist das Maskenmittel mechanisch und/oder elektrisch veränderbar oder einstellbar, um das durch das Maskenmittel auf der Projektionsfläche darstellbare Bild, Symbol, Logo und/oder den Schriftzug zu verändern. Grundsätzlich ist es auch denkbar, dass das durch das Maskenmittel auf der Projektionsfläche darstellbare Bild, Symbol, Logo und/oder der Schriftzug unveränderbar durch das Maskenmittel vorgegeben ist. Zudem können mehrere Bilder oder beispielsweise ein durchlaufender Schriftzug durch das Maskenmittel dargestellt werden.

Die Reflektoreinheit kann grundsätzlich beliebig ausgebildet sein.

Da der Oberflächenabschnitt des Reflektorelements als Freiformfläche ausgebildet ist, kann die Reflektoreinheit kompakt ausgeführt werden.

Wenn mehrere Reflektoreinheiten vorgesehen sind, ist es beispielsweise denkbar, dass eine erste Reflektoreinheit die Kondensoreinheit umfasst und eine zweite Reflektoreinheit die Objektiveinheit umfasst. Hierdurch kann die Anzahl der einzelnen Bauteile in der Beleuchtungseinrichtung weiter reduziert werden.

In einem weiteren Beispiel umfasst die Reflektoreinheit sowohl das Maskenmittel als auch die Kondensoreinheit und/oder die Objektiveinheit. Vorteilhaft lässt sich dadurch die Anzahl der Bauteile der Beleuchtungseinrichtung weiter reduzieren. Das Ausbilden der Reflektoreinheit sowohl als Maskenmittel als auch als Kondensoreinheit und/oder als Objektiveinheit ist insbesondere dann vorteilhaft, wenn in der Fahrzeugkomponente wenig Raum zur Verfügung steht, um die Beleuchtungseinrichtung darin oder daran anzuordnen.

In einem Beispiel umfasst die Reflektoreinheit sowohl das Maskenmittel als auch die Kondensoreinheit und/oder die Objektiveinheit.

In einem weiteren Beispiel umfasst die mindestens eine Kondensorlinse der Kondensoreinheit und/oder die mindstens eine Objektivlinse der Objektiveinheit mindestens ein torisches Linsenelement. Vorteilhaft lassen sich somit rechteckige Darstellungen mit hoher Beleuchtungsdichte, auch in den Ecken, auf einfache Weise realisieren.

Das Leuchtmittel kann, wenn die erfindungsgemäße Beleuchtungseinrichtung parallel zu einer Ebenen einer Projektionsfläche angeordnet ist, das Licht auch im Wesentlichen parallel zu der Ebene der Projektionsfläche abstrahlen. Auch ist ein schräges Abstrahlen relativ zur Projektionsfläche denkbar.

Die mindestens eine Kondensorlinse der Kondensoreinheit und/oder die mindestens eine Objektivlinse der Objektiveinheit kann grundsätzlich aber beliebig ausgestaltet sein.

Darüber hinaus liefert die Erfindung eine Fahrzeugkomponente eines Kraftfahrzeugs mit mindestens einer erfindungsgemäßen Beleuchtungseinrichtung. Die Fahrzeugkomponente kann eine beliebige Komponente am Kraftfahrzeug sein, die so angeordnet ist, dass sie einen Zugang zur äußeren Umgebung des Kraftfahrzeugs ermöglichen kann. Hierbei kann es sich beispielsweise um eine Karosserieverkleidung, um eine Stoßstangenvorrichtung, um Elemente der Fahrzeugtüren und dergleichen handeln. Bevorzugt kann diese Fahrzeugkomponente eine Rückblickvorrichtung, wie Innen- oder Außenspiegel oder Kamera, umfassen.

In einem Beispiel verläuft der Strahlengang des unmittelbar durch das Leuchtmittel abgestrahlten Lichts im Wesentlichen parallel zum einem Fahruntergrund. Dadurch, dass der Strahlengang im Wesentlichen parallel zum Fahruntergrund verläuft, ist die Beleuchtungseinrichtung im Wesentlichen horizontal angeordnet. Darüber hinaus ist es jedoch auch denkbar, dass die Beleuchtungseinrichtung schräg oder senkrecht zum Fahruntergrund verlaufend angeordnet ist.

In einem weiteren Beispiel ist in der Fahrzeugkomponente mindestens ein Hohlraum ausgebildet, der ein Gehäuse für die Beleuchtungseinrichtung bildet und in dem die Beleuchtungseinrichtung festlegbar ist. Grundsätzlich ist es denkbar, dass die Beleuchtungseinrichtung beispielsweise an der Fahrzeugkomponente festgelegt wird. Damit die Beleuchtungseinrichtung jedoch vor Beschädigung und Verschmutzung geschützt werden kann, erweist es sich als vorteilhaft, wenn die Beleuchtungseinrichtung in der Fahrzeugkomponente festlegbar ist. Neben dem Schutz vor Verschmutzungen und Beschädigungen wird hierdurch ferner eine Anordnung der Beleuchtungseinrichtung gewählt, die optisch ansprechend ist.

Schließlich liefert die Erfindung auch ein Kraftfahrzeug mit mindestens einer erfindungsgemäßen Fahrzeugkomponente.

Die Beleuchtungseinrichtung, die Fahrzeugkomponente sowie das Kraftfahrzeug der Erfindung erweisen sich in mehrfacher Hinsicht als vorteilhaft:
Dadurch, dass die Beleuchtungseinrichtung mindestens eine Reflektoreinheit umfasst, kann die Beleuchtungseinrichtung mit beliebiger Ausrichtung in oder an der Fahrzeugkomponente angeordnet werden. Dadurch wird wiederum eine Vielzahl von unterschiedlichen Einbausituationen ermöglicht, was die Einsetzbarkeit der Beleuchtungseinrichtung erweitert.
Dadurch, dass die Reflektoreinheit sowohl das Maskenmittel als auch die Kondensoreinheit und/oder die Objektiveinheit beispielsweise durch eine Freiformfläche umfassen kann, ist die Beleuchtungseinrichtung bauteilreduziert realisierbar und kann kompakt ausgeführt werden.

Weitere Merkmale, Einzelheiten sowie Vorteile der Erfindung ergeben sich aus den beigefügten Ansprüchen, aus der zeichnerischen Darstellung und in nachfolgender Beschreibung bevorzugte Beispiele einer Beleuchtungseinrichtung.

Dabei zeigt:
- Figur 1: eine schematische Darstellung eines ersten nicht erfindungsgemäßen Beispiels einer Beleuchtungseinrichtung;
- Figur 2: eine schematische Darstellung eines zweiten nicht erfindungsgemäßen Beispiels einer Beleuchtungseinrichtung;
- Figur 3: eine schematische Darstellung eines dritten nicht erfindungsgemäßen Beispiels einer Beleuchtungseinrichtung;
- Figur 4: eine schematische Darstellung eines vierten nicht erfindungsgemäßen Beispiels einer Beleuchtungseinrichtung; und
- Figur 5: eine schematische Darstellung eines fünften nicht erfindungsgemäßen Beispiels einer Beleuchtungseinrichtung.

Die Figuren zeigen jeweils eine Beleuchtungseinrichtung 2 für eine Fahrzeugkomponente eines Kraftfahrzeugs wie bspw. in Form eines Außenspiegels. Die gezeigten Beleuchtungseinrichtungen 2 umfassen jeweils ein Leuchtmittel 4, durch das Licht bspw. im Wesentlichen parallel zu einer Ebene einer Projektionsfläche 8 abstrahlbar ist.

Darüber hinaus umfasst die Beleuchtungseinrichtung 2 jeweils mindestens eine Kondensorlinse 10 einer Kondensoreinheit 12. Durch die Kondensorlinse 10 wird das von dem Leuchtmittel 4 abgestrahlte Licht in einen Strahlengang 6 eingekoppelt, der je nach Ausführungsbeispiel auch im Wesentlichen parallel zu der Ebene der Projektionsfläche 8 verlaufen kann.

Wie in den Figuren gezeigt, umfasst die Beleuchtungseinrichtung 2 auch mindestens eine Objektivlinse 14 einer Objektiveinheit 16.

Damit auf der Projektionsfläche 8 z.B. ein Logo dargestellt werden kann, umfasst die Beleuchtungseinrichtung 2 ferner ein Maskenmittel 18.

Darüber hinaus umfassen die in den Figuren dargestellten Beleuchtungseinrichtungen 2 jeweils eine Reflektoreinheit 20, die es ermöglicht, dass der Strahlengang 6 im Wesentlichen quer oder schräg zu der Projektionsfläche 8 umgelenkt werden kann.

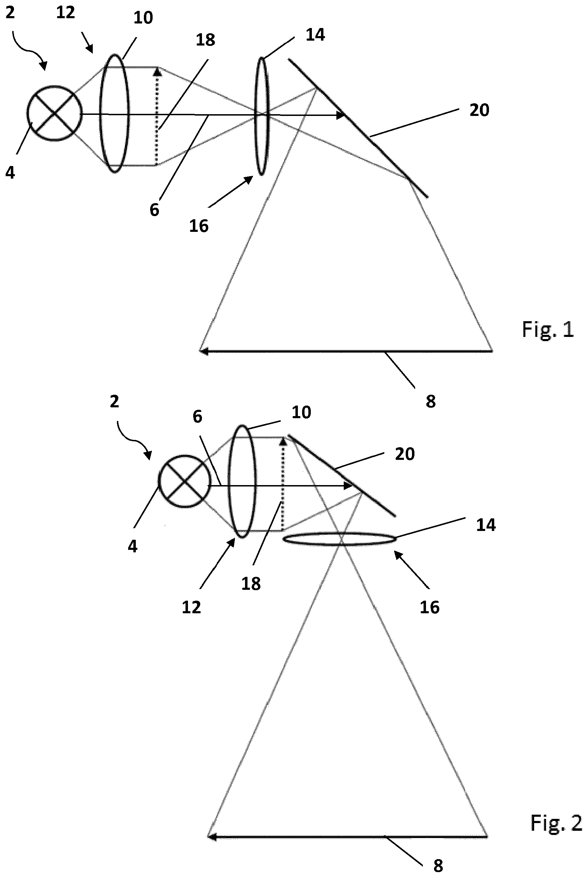

Figur 1 zeigt ein erstes Ausführungsbeispiel der Beleuchtungseinrichtung 2. In diesem Beispiel ist unmittelbar im Anschluss an das Leuchtmittel 4 die Kondensoreinheit 12 vorgesehen, die auch die Kondensorlinse 10 umfasst. Im Anschluss hieran passiert das Licht das Maskenmittel 18 bevor es auf die Objektivlinse 14, die in der Objektiveinheit 16 umfasst ist, auftrifft. Im weiteren Verlauf des Strahlengangs 6 trifft das Licht dann auf die Reflektoreinheit 20, durch die es im Wesentlichen um 90° Grad auf die Projektionsfläche 8 umgelenkt wird.

Figur 2 zeigt ein zweites Beispiel der Beleuchtungseinrichtung 2. In dieser Ausführungsform sind, wie auch in Figur 1 gezeigt, zunächst das Leuchtmittel 4, die Kondensoreinheit 12 und das Maskenmittel 18 hintereinander angeordnet, so dass das Licht auch nacheinander diese Komponenten durchläuft. Danach durchläuft das Licht jedoch nicht die Objektiveinheit 16, sondern wird zuerst an der Reflektoreinheit 20 umgelenkt. Nach dem Umlenken durch die Reflektoreinheit 20 durchläuft das Licht die Objektiveinheit 16, um sodann zur Projektionsfläche 8 zu gelangen. Durch diesen Aufbau lässt sich der benötigte Raum für den Einbau reduzieren.

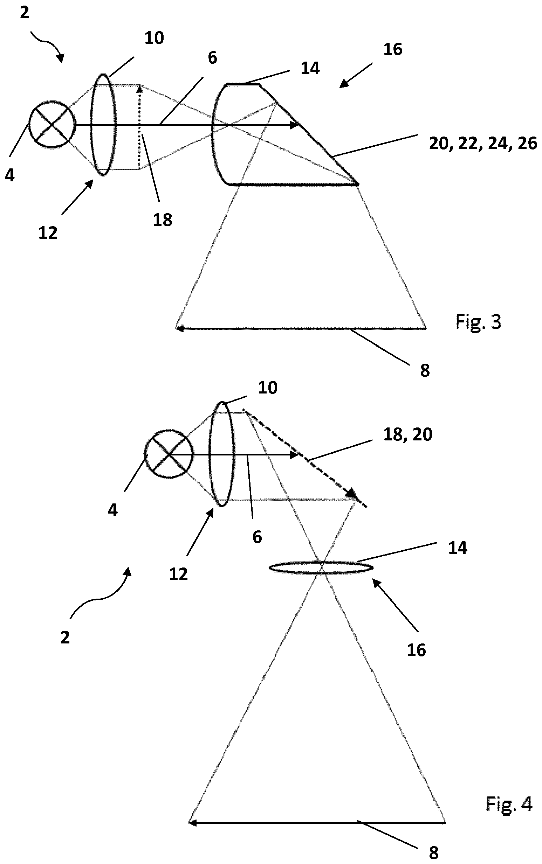

Figur 3 zeigt ein drittes Beispiel der Beleuchtungseinrichtung 2. In diesem Ausführungsbeispiel ist die Beleuchtungseinrichtung 2 bauteilreduziert ausgeführt. Zunächst durchläuft das von dem Leuchtmittel 4 abgestrahlte Licht die Kondensoreinheit 12 und das Maskenmittel 18, danach trifft es, wie es auch schon bereits in Figur 2 gezeigt wurde, unmittelbar auf die Reflektoreinheit 20. Die Reflektoreinheit 20 wird in dem in Figur 3 gezeigten Ausführungsbeispiel durch ein Reflektorelement 22 gebildet, das einen Lichtleiter 24 und/oder ein Prisma 26 umfasst. Hierdurch übernimmt das Reflektorelement 22 die Funktion der Objektiveinheit 16. Somit ist das in Figur 3 gezeigte Ausführungsbeispiel der Beleuchtungseinrichtung 2 bauteilreduziert herstellbar und kompakt ausführbar.

Figur 4 zeigt ein viertes Beispiel der Beleuchtungseinrichtung 2, die gemäß der Erfindung ausgeführt ist. Die gezeigte Beleuchtungseinrichtung 2 entspricht im Wesentlichender in Figur 2 gezeigten Beleuchtungseinrichtung 2. Im Unterschied zu der in Figur 2 gezeigten Beleuchtungseinrichtung 2 ist hier kein als separates Bauteil ausgebildetes Maskenmittel 18 zwischen der Kondensoreinheit 12 und der Reflektoreinheit 20 vorgesehen.

Vielmehr sind das Maskenmittel 18 und die Reflektoreinheit 20 in einem gemeinsamen Bauteil zusammengefasst. Auch hierdurch können die Einbaumaße der Beleuchtungseinrichtung 2 reduziert werden.

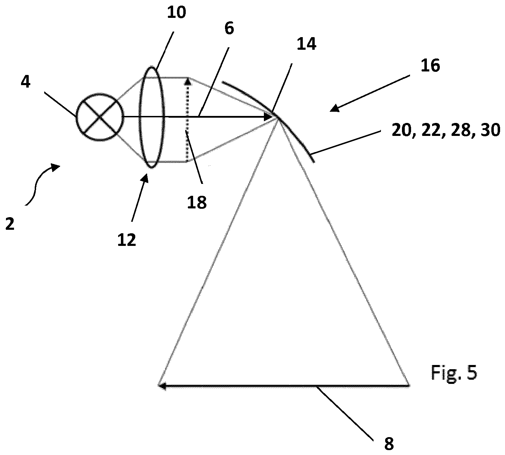

Figur 5 zeigt ein fünftes Beispiel der Beleuchtungseinrichtung 5. In dem gezeigten Ausführungsbeispiel sind die Objektiveinheit 16 und die Reflektoreinheit 20 in einem gemeinsamen Bauteil umfasst. Im Unterschied zu dem in Figur 3 gezeigten Ausführungsbeispiel umfasst die Reflektoreinheit 20 keinen Lichtleiter und/oder Prisma als Reflektorelement 22, sondern ist durch eine Freiformfläche 28, die an einem Oberflächenabschnitt 30 des Reflektorelements 22 ausgebildet ist, realisiert.

### Bezugszeichenliste

- 2: Beleuchtungseinrichtung
- 4: Leuchtmittel
- 6: Strahlengang
- 8: Projektionsfläche
- 10: Kondensorlinse
- 12: Kondensoreinheit
- 14: Objektivlinse
- 16: Objektiveinheit
- 18: Maskenmittel
- 20: Reflektoreinheit
- 22: Reflektorelement
- 24: Lichtleiter
- 26: Prisma
- 28: Freiformfläche
- 30: Oberflächenabschnitt

## Patentansprüche

1. Fahrzeugkomponenten-Beleuchtungseinrichtung (2) für eine Rückblickvorrichtung eines Kraftfahrzeugs, aufweisend:
∘ mindestens ein Leuchtmittel (4) zum Abstrahlen von Licht;
∘ eine Kondensoreinheit (12) mit mindestens einer Kondensorlinse (10), wobei die Kondensoreinheit (12) angepasst ist, das von dem mindestens einen Leuchtmittel (4) abgestrahlte Licht in einen Strahlengang (6) zu bündeln;
∘ mindestens ein Maskenmittel (18), das in dem Strahlengang (6) angeordnet ist und durch das ein Bild, Symbol, Logo und/oder ein Schriftzug auf einer Projektionsfläche (8) darstellbar ist;
∘ eine Objektiveinheit (16) mit mindestens einer Objektivlinse (14), die in dem Strahlengang (6) angeordnet ist; und
∘ mindestens eine Reflektoreinheit (20), die zwischen der Kondensoreinheit (12) und der Projektionsfläche (8) angeordnet ist, wobei die Reflektoreinheit (20) angepasst ist, den Strahlengang (6), insbesondere im Wesentlichen quer oder schräg zur Projektionsfläche (8), umzulenken, wobei die Reflektoreinheit (20) ein Reflektorelement (22) umfasst,
wobei die mindestens eine Reflektoreinheit (20) entlang des Strahlengangs (6) des Lichts vom Leuchtmittel (4) bis zur Projektionsfläche (8) vor der Objektiveinheit (16) angeordnet ist,
wobei das Reflektorelement (22) mindestens einen Oberflächenabschnitt (30) umfasst, durch den das Licht bezüglich des Strahlengangs (6) umlenkbar ist,
wobei das Maskenmittel (18) entlang des Strahlengangs (6) des Lichts vom Leuchtmittel (4) bis zur Projektionsfläche (8) zwischen der Kondensoreinheit (12) und der Objektiveinheit (16) angeordnet ist,
**dadurch gekennzeichnet, dass** der Oberflächenabschnitt (30) des Reflektorelements (22) als Freiformfläche (28) ausgebildet ist, um das Licht zu bündeln.

2. Beleuchtungseinrichtung nach Anspruch 1, wobei
die mindestens eine Reflektoreinheit (20) angepasst ist, den Strahlengang (6) in einem Bereich von 35° bis 145 °, bevorzugt von 45° bis 135°, bevorzugter von 60° bis 120°, insbesondere um 90°, umzulenken.

3. Beleuchtungseinrichtung nach einem der vorhergehenden Ansprüche, wobei die Reflektoreinheit (20) das Maskenmittel (18) umfasst.

4. Beleuchtungseinrichtung nach einem der vorhergehenden Ansprüche, wobei das Maskenmittel (18) mechanisch und/oder elektrisch veränderbar oder einstellbar ist, um das durch das Maskenmittel (18) auf der Projektionsfläche (8) darstellbare Bild, Symbol, Logo und/oder den Schriftzug zu verändern.

5. Beleuchtungseinrichtung nach einem der vorhergehenden Ansprüche, wobei die mindestens eine Kondensorlinse (10) der Kondensoreinheit (12) und/oder die mindestens eine Objektivlinse (14) der Objektiveinheit (16) mindestens ein torisches Linsenelement umfasst, bzw. umfassen.

6. Beleuchtungseinrichtung nach einem der vorhergehenden Ansprüche, wobei das Leuchtmittel (4) das Licht parallel oder schräg zur Projektionsfläche (8) abstrahlt.

7. Fahrzeugkomponente, insbesondere Rückblickvorrichtung, wie Innen- oder Außenspiegel oder Kamera, eines Kraftfahrzeugs, mit mindestens einer Beleuchtungseinrichtung (2) nach einem der Ansprüche 1 bis 6.

8. Fahrzeugkomponente nach Anspruch 7, wobei in der Fahrzeugkomponente mindestens ein Hohlraum ausgebildet ist, der ein Gehäuse für die Beleuchtungseinrichtung (2) bildet und in dem die Beleuchtungseinrichtung (2) festlegbar ist.

9. Kraftfahrzeug mit mindestens einer Fahrzeugkomponente, insbesondere Rückblickvorrichtung, wie Innen- oder Außenspiegel oder Kamera, nach Anspruch 7 oder .

## Claims

1. A vehicle component lighting device (2) for a rear-view apparatus of a motor vehicle, having
∘ at least one illuminant (4) for radiating light;
∘ a condenser unit (12) with at least one condenser lens (10), wherein the condenser unit (12) is adapted to bundle the light radiated from the at least one illuminant (4) into an optical path (6);
∘ at least one mask means (18) which is arranged in the optical path (6) and through which an image, a symbol, a logo and/or lettering is presentable on a projection surface (8);
∘ an objective unit (16) with at least one objective lens (14) which is arranged in the optical path (6); and
∘ at least one reflector unit (20) which is arranged between the condenser unit (12) and the projection surface (8), wherein the reflector unit (20) is arranged to redirect the optical path (6), in particular substantially perpendicularly or diagonally to the projection surface (8), wherein the reflector unit (20) comprises a reflector element (22),
wherein the at least one reflector unit (20) is arranged in front of the objective unit (16) along the optical path (6) of the light from the illuminant (4) to the projection surface (8), wherein the reflector element (22) comprises at least one surface portion (30) through which the light related to the optical path (6) is redirectable,
wherein the mask means (18) is arranged along the optical path (6) of the light from the illuminant (4) to the projection surface (8) between the condenser unit (12) and the objective unit (16),
**characterized in that**
the surface portion (30) of the reflector element (22) is formed as a free-form surface (28) to bundle the light.

2. The lighting device according to Claim 1, wherein
the at least one reflector unit (20) is arranged to redirect the optical path (6) in a range from 35° to 145°, preferably from 45° to 135°, more preferably from 60° to 120°, in particularly by 90°.

3. The lighting device according to any one of the preceding claims, wherein
the reflector unit (20) comprises the mask means (18).

4. The lighting device according to any one of the preceding claims, wherein
the mask means (18) is mechanically and/or electrically changeable or adjustable in order to change the image, the symbol, the logo and/or lettering which is presentable on the projection surface (8) by the mask means (18).

5. The lighting device according to any one of the preceding claims, wherein
the at least one condenser lens (10) of the condenser unit (12) and/or the at least one objective lens (14) of the objective unit (16) comprise(s) at least one toric lens element.

6. The lighting device according to any one of the preceding claims, wherein
the illuminant (4) radiates the light in parallel or diagonally to the projection surface (8).

7. A vehicle component, in particular a rear-view apparatus, such as interior or exterior mirrors or a camera, of a motor vehicle, having at least one lighting device (2) according to any one of Claims 1 to 6.

8. The vehicle component according to Claim 7, wherein
at least one cavity is formed in the vehicle component which forms a case for the lighting device (2) and in which the lighting device (2) is fixable.

9. A motor vehicle with at least one vehicle component, in particular a rear-view apparatus, such as interior or exterior mirrors, according to Claim 7 or 8.

## Revendications

1. Dispositif d'éclairage de composants de véhicule (2) pour un dispositif rétroviseur d'un véhicule à moteur, présentant :
∘ au moins un moyen d'éclairage (4) pour émettre de la lumière ;
∘ une unité de condenseur (12) avec au moins une lentille de condenseur (10), l'unité de condenseur (12) étant adaptée pour concentrer la lumière émise par l'au moins un moyen d'éclairage (4) en un trajet de faisceau (6) ;
∘ au moins un moyen de masquage (18) qui est disposé dans le trajet de faisceau (6) et par lequel une image, un symbole, un logo et/ou un lettrage peuvent être représentés sur une surface de projection (8) ;
∘ une unité d'objectif (16) avec au moins une lentille d'objectif (14), qui est disposée dans le trajet de faisceau (6) ; et
∘ au moins une unité de réflecteur (20) qui est disposée entre l'unité de condenseur (12) et la surface de projection (8), l'unité de réflecteur (20) étant adaptée pour dévier le trajet de faisceau (6), en particulier essentiellement de façon transversale ou de façon oblique par rapport à la surface de projection (8), l'unité de réflecteur (20) comprenant un élément réflecteur (22),
l'au moins une unité de réflecteur (20) étant disposée devant l'unité d'objectif (16) sur le trajet de faisceau (6) de la lumière du moyen d'éclairage (4) jusqu'à la surface de projection (8), l'élément réflecteur (22) comprenant au moins une section de surface (30) par laquelle une déviation de la lumière peut être effectuée, relativement au trajet de faisceau (6),
le moyen de masquage (18) étant disposé sur le trajet de faisceau (6) de la lumière du moyen d'éclairage (4) jusqu'à la surface de projection (8) entre l'unité de condenseur (12) et l'unité d'objectif (16),
**caractérisé en ce que**
la section de surface (30) de l'élément réflecteur (22) est formée comme surface de forme libre (28) afin de concentrer la lumière.

2. Dispositif d'éclairage selon la revendication 1,
l'au moins une unité de réflecteur (20) étant adaptée pour dévier le trajet de faisceau (6) dans une plage de 35° à 145°, de préférence de 45° à 135°, encore plus préférablement de 60° à 120°, en particulier de 90°.

3. Dispositif d'éclairage selon l'une des revendications précédentes,
l'unité de réflecteur (20) comprend le moyen de masquage (18).

4. Dispositif d'éclairage selon l'une des revendications précédentes,
le moyen de masquage (18) pouvant être modifiable ou réglable de façon mécanique et/ou électrique, afin de modifier l'image, le symbole, le logo et/ou le lettrage pouvant être représentés sur la surface de projection (8) par le moyen de masquage (18).

5. Dispositif d'éclairage selon l'une des revendications précédentes,
l'au moins une lentille de condenseur (10) de l'unité de condenseur (12) et/ou l'au moins une lentille d'objectif (14) de l'unité d'objectif (16) comprenant au moins un élément de lentille torique.

6. Dispositif d'éclairage selon l'une des revendications précédentes,
le moyen d'éclairage (4) émettant la lumière de façon parallèle ou de façon oblique par rapport à la surface de projection (8).

7. Composant de véhicule, en particulier dispositif rétroviseur, tel un rétroviseur intérieur ou extérieur ou une caméra, d'un véhicule à moteur, avec au moins un dispositif d'éclairage (2) selon l'une des revendications 1 à 6.

8. Composant de véhicule selon la revendication 7,
au moins une cavité étant formée dans le composant de véhicule, laquelle forme un boîtier pour le dispositif d'éclairage (2) et dans laquelle le dispositif d'éclairage (2) peut être fixé.

9. Véhicule à moteur avec au moins un composant de véhicule, en particulier un dispositif rétroviseur, tel un rétroviseur intérieur ou extérieur ou une caméra, selon la revendication 7 ou 8.
